# EUROPEAN PATENT APPLICATION

(11) **EP 4 101 516 A1**
(43) Date of publication of application: **14.12.2022**
(21) Application number: 20923894.8
(22) Date of filing: 12.03.2020
(51) Int. Cl.: B01D 21/01, B01F 1/00, B01F 5/00

(54) **POLYMER FLOCCULANT MIXING AND DISSOLVING SYSTEM**

(71) Applicant: TOMOE Engineering Co., Ltd., Shinagawa-ku, Tokyo 1410001 (JP)
(72) Inventor: HIRAMATSU Tatsuo, Tokyo 141-0001 (JP); SHIBATA Satoshi, Tokyo 141-0001 (JP); HATANO Keiichi, Tokyo 141-0001 (JP); OGIHARA Tetsuya, Tokyo 141-0001 (JP)
(74) Representative: Horn Kleimann Waitzhofer Patentanwälte PartG mbB
(86) International application number: PCT/JP2020/010934
(87) International publication number: WO 2021/181633

(57) **Abstract**

The present invention provides a polymer flocculant mixing and dissolving system that can stably supply the solution in an amount required in the downstream process.

The present invention comprising: a mixing tank (2) in which a solid polymer flocculant is mixed with water used as a solvent; a liquid feed unit (3) for feeding an aqueous solution containing the polymer flocculant from the mixing tank; a regenerative mixer (4A,4B) used to mix and dissolve the polymer flocculant by applying pressure to the aqueous solution containing the polymer flocculant fed from the liquid feed unit while forming a vortex flow; a process channel (61) through which the aqueous solution that has passed through the regenerative mixer is fed to a downstream process; a circulation channel (62) through which the aqueous solution is returned to a position on an upstream side of the liquid feed unit; and a flow rate adjusting unit (6) for adjusting a balance between a flow rate of the aqueous solution flowing through the process channel and a flow rate of the aqueous solution flowing through the circulation channel.

## Description

### TECHNICAL FIELD

The present invention relates to a polymer flocculant mixing and dissolving system, and particularly to a technique for dissolving a solid polymer flocculant in water as a solvent.

### BACKGROUND ART

In the field of sludge disposal, sludge concentration processing and sludge dehydration processing are performed. At this time, processing for adding a flocculant and flocculating sludge is performed in order to improve sludge concentration efficiency and sludge dehydration efficiency. In the field of water treatment, processing for flocculating and precipitating suspended substances is performed. Also, at this time, processing for adding a flocculant to water to be treated and flocculating suspended substances perform in order to improve the efficiency of flocculation and precipitation.

In the above-described sludge disposal and water treatment, various flocculants such as an inorganic flocculant, a cationic polymer flocculant, and an anionic polymer flocculant are used selectively. Of these flocculants, solid polymer flocculants have the drawback of being poorly soluble in a liquid while exhibiting a high flocculation effect due to cross-linking flocculation. Therefore, solid polymer flocculants are not added directly to sludge or the like, but are dissolved in water in advance to form an aqueous solution and then added to sludge or the like such that a predetermined chemical injection rate is achieved.

However, the polymer flocculants have another problem in that, if a long period of time passes after an aqueous solution of the polymer flocculant has been prepared, the aqueous solution deteriorates, resulting in a decrease in the flocculation effect. Therefore, it is not preferable that a large amount of the aqueous solution is prepared in advance and stored in a tank or the like. In order to sufficiently achieve the original flocculation effect of the polymer flocculant, it is preferable to add a fresh aqueous solution that is used as soon as possible after the polymer flocculant has dissolved in water. In view of these circumstances, the inventors of the present invention realized a polymer flocculant mixing and dissolving system capable of producing a polymer flocculant solution in a short period of time using low power (see Patent Document 1), and implemented and are considering further improvement thereof.

### CITATION LIST

### [PATENT LITERATURE]

Patent Literature 1: Japanese Patent No. 5731089

### SUMMARY OF INVENTION

### PROBLEMS TO BE SOLVED BY THE INVENTION

In particular, the polymer flocculant mixing and dissolving system reported in Patent Document 1 makes it possible to produce a polymer flocculant solution in a short period of time using low power, but a liquid feed pump serving as a liquid feed unit needs to be used to adjust the flow rate of the solution fed to a downstream process, and at this time, there is a concern that the liquid feed pump will be damaged due to the generation of excessive negative pressure unless the rotation rate of a regenerative mixer can be appropriately controlled. Accordingly, every time the flow rate of the solution fed to a downstream process is changed, the rotation rate of the regenerative mixer also needs to be changed. In this case, when an automatic control system is employed, for example, a control device (e.g., inverter) needs to be installed, and when a manual control system is employed, for example, the load on an operator increases.

The present invention was achieved in order to solve the foregoing problems, which are shown as one of examples, and it is an object thereof to provide a polymer flocculant mixing and dissolving system that can stably supply the solution in an amount required in the downstream process.

### MEANS FOR SOLVING THE PROBLEMS

(1) A polymer flocculant mixing and dissolving system according to the present invention comprising: a mixing tank in which a polymer flocculant in a solid state is mixed with water used as a solvent; a liquid feed unit for feeding an aqueous solution containing the polymer flocculant from the mixing tank; a regenerative mixer used to mix and dissolve the polymer flocculant by applying pressure to the aqueous solution containing the polymer flocculant fed from the liquid feed unit while forming a vortex flow; a process channel through which the aqueous solution that has passed through the regenerative mixer is fed to a downstream process; a circulation channel through which the aqueous solution is returned to a position on an upstream side of the liquid feed unit; and a flow rate adjusting unit for adjusting a balance between a flow rate of the aqueous solution flowing through the process channel and a flow rate of the aqueous solution flowing through the circulation channel.
   Here, even in a case where a common regenerative pump ("Karyu pump") is used, when the pump is used for the purpose of dissolving the swollen undissolved polymer flocculant, the pump is used for the purpose of obtaining the functions and effects of the present invention, and therefore, it is construed that the above regenerative mixer encompasses common regenerative pumps. It should be noted that the regenerative pump ("Karyu pump") may also be referred to as a "cascade pump".
(2) Preferably, the aqueous solution is returned to a suction side of the liquid feed unit and/or the mixing tank through the circulation channel.
(3) A flow rate adjustment controlling unit for automatically controlling the flow rate adjusting unit based on information regarding the flow rate of the aqueous solution required in the downstream process may be further comprised.
(4) A pressure adjusting unit for controlling pressure on a discharge side of the regenerative mixer in a channel between the regenerative mixer and the flow rate adjusting unit is comprised.
(5) The liquid feed unit and the regenerative mixer are preferably set to the operation conditions in which a constant and high load.

### ADVANTAGEOUS EFFECTS OF INVENTION

The polymer flocculant mixing and dissolving system of the present invention has a configuration in which a polymer flocculant in a solid state is mixed with water used as a solvent, a liquid feed unit is used to feed an aqueous solution containing the polymer flocculant obtained through the mixing to a regenerative mixer, and the polymer flocculant is mixed and dissolved by applying pressure to the aqueous solution while forming a vortex flow in this regenerative mixer. In this configuration, a process channel through which the aqueous solution is fed to a downstream process and a circulation channel through which the aqueous solution is returned to a position on the upstream side of the liquid feed unit are provided, and the flow rate of the aqueous solution flowing through the process channel and the flow rate of the aqueous solution flowing through the circulation channel are adjusted using a flow rate adjusting unit, thus making it possible to stably operate the liquid feed unit and the regenerative mixer. As a result, the solution can be stably supplied in an amount required in the downstream process. Furthermore, a phenomenon can be suppressed in which the liquid feed unit is adversely affected by excessive negative pressure generated on the suction side of the regenerative mixer.

Moreover, in a preferred example, the regenerative mixer and the liquid feed unit are operated with a constant and high load, and thus the dissolving ability of the overall system is increased correspondingly. Furthermore, the cost can be reduced by omitting a control device (e.g., inverter) that automatically controls the load on the liquid feed unit and the regenerative mixer, and the load on the operator is also reduced because there is little need to perform manual control.

### BRIEF DESCRIPTION OF DRAWINGS

FIG. 1 shows the polymer flocculant mixing and dissolving system according to first embodiment of the present invention,
FIG. 2 explains the configuration of the regenerative mixer of the above system,
FIG. 3 shows the modification example of the circulation channel of the above system,
FIG. 4 shows another modification example of the circulation channel of the above system,
FIG. 5 shows the polymer flocculant mixing and dissolving system according to second embodiment of the present invention,
FIG. 6 shows the modification example of the circulation channel of the above system,
FIG. 7 shows another modification example of the circulation channel of the above system,

### MODES FOR CARRYING OUT THE INVENTION

Hereinafter, a polymer flocculant mixing and dissolving system according to a preferred embodiment of the present invention will be described with reference to the accompanying drawings. However, the technical scope of the present invention should not be construed as being limited in any way by the description of the embodiment below.

### (FIRST EMBODIMENT)

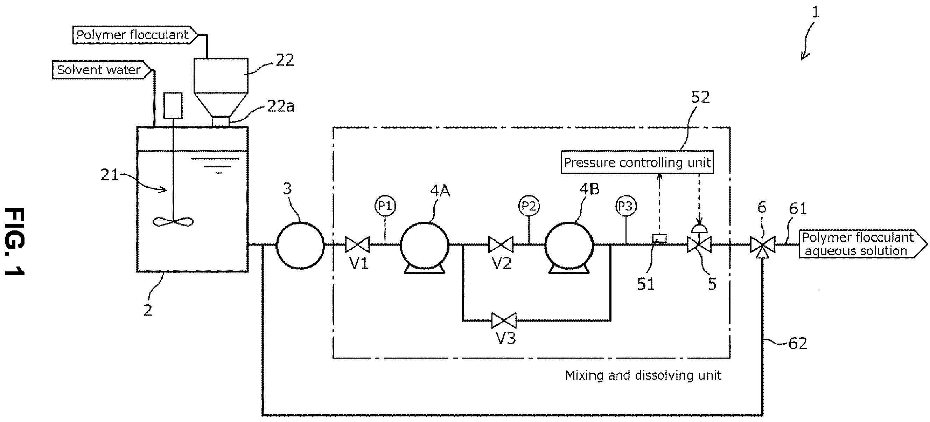

FIG. 1 is a schematic diagram showing an overall configuration of a polymer flocculant mixing and dissolving system (referred to as "mixing and dissolving system" hereinafter) according to this embodiment. As shown in FIG. 1, a mixing and dissolving system 1 includes a mixing tank 2 in which a polymer flocculant in a solid state is mixed with water as a solvent. The mixing tank 2 is a sealed or open tank in which water as a solvent can be stored. The water as a solvent is supplied into the tank through a channel such as a pipe connected to the top of the tank, for example. The mixing tank 2 may further include a stirring unit for stirring water in the tank and dispersing the polymer flocculant. In one example, a stirrer 21 that uses a driving motor to rotate a stirring blade arranged in the tank can be used as the stirring unit. Known stirring unit other than the stirrer may be used.

The mixing tank 2 can be designed as appropriate to have a capacity that corresponds to the amount of an aqueous solution to be prepared. In one example, the mixing tank 2 can be designed to have a capacity that is suitable for an operation in which the time for mixing in the tank (that is, a residence time) is set to 5 to 15 minutes, and preferably 10 minutes. The reason why the mixing time is set as described above is to secure the period of time required to allow the polymer flocculant to swell to an extent at which the polymer flocculant can be dissolved in a latter process. When the mixing time is too short, the polymer flocculant may swell insufficiently and thus the polymer flocculant cannot be dissolved sufficiently even in a latter process. On the contrary, an excessively long mixing time is contrary to the object of preparing a fresh aqueous solution. In addition, the size of the mixing tank 2 increases disadvantageously. A continuous supply method that continuously supplies water as a solvent into the tank can be used. The continuous supply method has the advantage in that the size of the mixing tank 2 can be reduced. Instead of the continuous supply method, a batch method may be used in which a certain amount of water is placed in the tank, the polymer flocculant is added thereto, and then water (aqueous solution) in an amount that was placed into the tank is removed.

The polymer flocculant in a solid state in powder form or particle form, for example is quantitatively added to the mixing tank 2 using a hopper 22 arranged on the top of the mixing tank 2, for example. The hopper 22 includes a main body portion formed in a cone shape, and has a configuration in which the polymer flocculant is stored thereinside, cut out the polymer flocculant quantitatively from the bottom portion, and added to the mixing tank 2. The hopper 22 is sealed up such that the polymer flocculant does not absorb moisture while being stored. Furthermore, a moisture prevention measure such as blowing of dry gas may be taken. A discharge unit 22a for cutting out the polymer flocculant quantitatively from the hopper is arranged at the bottom portion of the hopper 22. In one example, a screw conveyor-type metering feeder can be used as the discharge unit 22a. It should be noted that the hopper 22 is a preferred example of a unit for adding the polymer flocculant quantitatively to the mixing tank 2, and another addition unit may be used or an operator may add the polymer flocculant manually.

A liquid feed pump 3 that is an example of a liquid feed unit is connected to the mixing tank 2. The liquid feed pump 3 continuously remove the aqueous solution from the tank and feeding the aqueous solution to a downstream process. The aqueous solution to be removed from the mixing tank 2 contains the polymer flocculant that has already been dissolved, and the undissolved polymer flocculant swollen by water. The viscosity of the aqueous solution increases due to the polymer flocculant being dissolved therein, and therefore, the configuration in which the liquid feed pump 3 is used to feed the aqueous solution to the subsequent mixing and dissolving process is applied. There is no limitation on the type of pump used as the liquid feed pump 3. The pump need not have quantitative performance in particular. Also, there is no particular need to provide a device such as an inverter that variably controls the flow rate of a liquid fed by the pump. A liquid feed unit other than a pump may also be employed.

A first regenerative mixer 4A is connected to a channel such as a pipe connected on the discharge side of the liquid feed pump 3, and a second regenerative mixer 4B is connected subsequently. That is, a configuration in which the first regenerative mixer 4A and second regenerative mixer 4B used to mix and dissolve the polymer flocculant are arranged at two positions in series is applied. Valves V (VI, V2, V3), pressure gauges P (PI, P2, P3), and the like may be provided at the intermediate positions of the channel between the liquid feed pump 3 and the first regenerative mixer 4A and at the intermediate positions of the channel between the first regenerative mixer 4A and the second regenerative mixer 4B. It should be noted that the pressure on the suction side of the first regenerative mixer may be a negative pressure, and therefore, a compound gauge can be used as the pressure gauge P1 in one example. A bypass channel to be used to feed a liquid to the downstream side with the second regenerative mixer 4B being bypassed may be provided for the purpose of enabling the independent operation of the first regenerative mixer 4A.

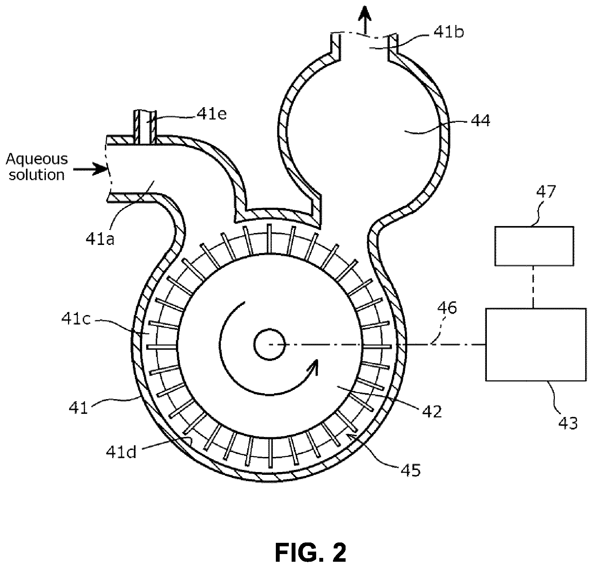

Regarding the first regenerative mixer 4A and the second regenerative mixer 4B, regenerative mixers having different specifications may be arranged, but it is preferable to use regenerative mixers having the same structure and the same processing capacity. The preferred example of the configuration of the regenerative mixers 4A and 4B will be described more specifically. As shown in FIG. 2, the regenerative mixers 4A and 4B each include a casing 41 having a suction port 41a and a discharge port 41b for the aqueous solution, a bladed wheel 42 that corresponds to an impeller of a pump, and a driving motor 43 serving as a driving mechanism for rotating the bladed wheel 42. For the sake of convenience of illustrating the diagram, the driving motor 43 is shown by a block diagram.

The casing 41 has an internal region 41c that is in communication with the suction port 41a and the discharge port 41b for the aqueous solution and rotatably accommodates the bladed wheel 42. This internal region 41c has an inner circumferential surface 41d that faces the outer circumferential edge of the bladed wheel 42 in a non-contact manner with a gap there between. The aqueous solution sucked into the casing 41 through the suction port 41a is transferred in the internal region 41c of the casing with pressure being applied by the rotating bladed wheel 42, and is discharged through the discharge port 41b. A buffer region 44 having an increased capacity is formed in the discharge port 41b, for preferred example. The aqueous solution discharged from the casing 41 forms a vortex flow, and this buffer region 44 can eliminate the vortex flow. An injection port 41e for injecting so-called "priming water" into the casing 41 at the time of start-up is provided in the suction port 41a, for preferred example.

The bladed wheel 42 is formed in substantially a disk shape, and is arranged in the internal region 41c of the casing 41 so as to be capable of rotating around a line extending from the center of the circle in an orthogonal direction (vertical direction to the sheet) as a rotation axis. A large number of grooves 45 for forming a minute vortex flow along the inner circumferential surface 41d of the casing 41 are formed in a radial pattern at the outer circumferential edge of the bladed wheel 42. These large numbers of grooves 45 are formed in a radial pattern all over the circumference of the outer circumferential edge of the bladed wheel 42.

A rotating shaft 46 is connected to the bladed wheel 42 along the above-described rotation axis. The rotating shaft 46 passes through the casing 41 and is coupled to the driving motor 43 arranged outside, and a configuration in which the bladed wheel 42 is rotated through the driving of the driving motor 43 is applied. A portion of the casing 41 through which the rotating shaft 46 passes can be sealed using a sealing mechanism (not shown) such as mechanical sealing.

Referring back to FIG. 1, a pressure adjusting unit for controlling the pressure on the discharge side of the second regenerative mixer 4B to a predetermined pressure is provided in a channel such as a pipe connected on the discharge side of the second regenerative mixer 4B, for preferred example. In one example for automatically control, a combination of a pressure adjusting valve 5 that adjusts a pressure by valve opening degree, a pressure sensor 51, and a pressure controlling unit 52 that controls the degree of opening of the pressure adjusting valve 5 such that a value detected by the pressure sensor 51 becomes a predetermined pressure can be used as the pressure adjusting unit. The pressure adjusting unit may be configured so as to be manually controlled. In an example, an operator adjusts the valve opening degree of the pressure adjusting valve 5 such that a value detected by the pressure sensor 51 or an alternative pressure gauge becomes a predetermined pressure.

Moreover, the predetermined pressure refers to a set pressure value that is determined in advance depending on the type of polymer flocculant, for preferred example. That is, attention is focused on a characteristic in which a polymer flocculant is easily dissolved in a solvent due to the infiltration into the solvent being promoted under high pressure, and in addition, the degree of pressure varies depending on the type of polymer flocculant, and thus a configuration in which the pressure is controlled through pressure application to a pressure suitable for the dissolving of the polymer flocculant is applied. Therefore, it is preferable to possess information regarding a pressure set value that is determined in advance in association with the type of polymer flocculant or store such information in a memory or the like of a computer of the pressure controlling unit 52. The pressure set value may be determined based on the components, the molecular weight, and the like of the polymer flocculant, for example, or determined through an actual test. An operator sets the pressure set value for the pressure controlling unit 52 depending on the type of polymer flocculant, or alternatively, the pressure controlling unit 52 reads the information from the memory or the like and sets the pressure set value.

The channel for the aqueous solution that has passed through the pressure adjusting valve 5 is branched into a process channel 61 through which the aqueous solution is fed to the downstream process and a circulation channel 62 through which the aqueous solution is returned to the suction side (preferably a suction portion) of the liquid feed pump 3. Furthermore, a three-way valve 6 serving as the flow rate adjusting unit is arranged at the branch point. The ratio between the flow rate of the aqueous solution flowing through the process channel 61 and the flow rate of the aqueous solution flowing through the circulation channel 62 is adjusted by changing the degree of opening of the three-way valve 6. That is, a balance between the flow rate of the aqueous solution flowing through the process channel 61 and the flow rate of the aqueous solution flowing through the circulation channel 62 is adjusted. A configuration is employed in which the ratio between the flow rate in the process channel 61 and the flow rate in the circulation channel 62 can be adjusted to 0 to 100% : 100 to 0%, which is an example of the adjustable range.

The aqueous solution (i.e., polymer flocculant solution) is fed to the downstream process through the process channel 61. In the sludge disposal process, for example, the aqueous solution may be added to the sludge as is, or may be once passed through a buffer tank or the like and then added to sludge. Also, in the water treatment process, the aqueous solution can be added to water to be treated in the same manner. In the sludge disposal process, sludge to which the polymer flocculant solution has been added such that a predetermined chemical injection rate is achieved is supplied to a decanter-type centrifugal concentrator or centrifugal dehydrator, for example, and then solid-liquid separation such as concentration or dehydration is performed. Also, in the water treatment process, water to be treated to which the polymer flocculant solution has been added such that a predetermined chemical injection rate is achieved is supplied to a sedimentation tank, a filtration apparatus, or the like, and then solid-liquid separation is performed. However, there is no limitation on the type of solid-liquid separation apparatus, and the polymer flocculant solution prepared using the mixing and dissolving system 1 of this embodiment can be used in known solid-liquid separation apparatuses. It should be noted that, in this embodiment, the regenerative mixers 4A and 4B having a configuration shown in FIG. 2 are shown as a preferred aspect, but a common regenerative pump ("Karyu pump") may be used instead. The regenerative mixers 4A and 4B shown in FIG. 2 are regenerative turbo mixers that have a structure based on that of a regenerative pump and exert an improved mixing function. Therefore, although an inferior effect is exhibited, even a common regenerative pump can be used to dissolve an undissolved polymer flocculant in some cases. It should be noted that the regenerative pump may also be referred to as a "cascade pump".

There is no particular limitation on the type of polymer flocculant to be used in the mixing and dissolving system 1 of this embodiment. The polymer flocculant can be selected as appropriate depending on the type, composition, and the like of sludge to be treated, water to be treated, and the like. In sludge disposal, cationic polymer flocculants are mainly used, but anionic or amphoteric polymer flocculants other than the cationic polymer flocculants are used in some cases. In one example, methacrylates ester and acrylates ester can be used as the cationic polymer flocculants. More specifically, dimethyl-aminoethyl methacrylate and dimethyl-aminoethyl acrylate can be used. Other examples of the cationic polymer flocculants include cross-linking polymer flocculants and amidine-based polymer flocculants. These polymer flocculants have a molecular weight of 150 to 16,000,000.

### (FUNCTIONS)

Next, a method of generating a polymer flocculant solution by using the above-described mixing and dissolving system 1 will be described. It should be noted that, although a case where the cationic polymer flocculant is used is mainly described in the description below, other polymer flocculants exhibit the same functions and effects unless otherwise stated. When the mixing and dissolving system 1 is started, first, water as a solvent is supplied to the mixing tank 2 at a predetermined flow rate, and the polymer flocculant is added thereto at a predetermined flow rate so as to form an aqueous solution of a predetermined concentration. In one example, the concentration can be set to 0.1 to 0.3 mass %, and preferably 0.2 mass %. Meanwhile, the liquid feed pump 3, the first regenerative mixer 4A, and the second regenerative mixer 4B are driven, and the set value of pressure controlled by the pressure controlling unit 52 is determined/changed. Here, in one example, the pressure set value is set to 0.3 MPa.

The polymer flocculant that has been mixed with water is dissolved in water in the mixing tank 2, but a portion thereof remains undissolved. However, since approximately 10 minutes has been secured for mixing of the polymer flocculant with water in the mixing tank 2, the polymer flocculant enters a swollen state by water. Aqueous solution having an increased viscosity due to the polymer flocculant being dissolved is fed to the first regenerative mixer 4A by the liquid feed pump 3, in a state in which the undissolved polymer flocculant is contained therein. The flow rate of the aqueous solution is 25 L/min, for example.

Here, based on the premise that the above-mentioned pressure set value can be secured, for example, it is preferable to set operation conditions in which constant and high loads are applied as the operation conditions of the liquid feed pump 3, the first regenerative mixer 4A, and the second regenerative mixer 4B. More specifically, operation conditions in which high loads within specifications (e.g., 70% or more, desirably 100%, of the maximum capacities thereof) are applied are set as the operation conditions of the liquid feed pump 3, the first regenerative mixer 4A, and the second regenerative mixer 4B, and these conditions are continuously used during normal operation in principle. Constant operation is achieved by rotating the driving motors thereof at a constant speed. In this manner, the liquid feed pump 3, the first regenerative mixer 4A, and the second regenerative mixer 4B are operated (to perform mixing and dissolving) while high loads within specifications are applied thereto during normal operation without changing the rotation rates.

The liquid feed pump 3 feed the aqueous solution to the first regenerative mixer 4A, the aqueous solution is repeatedly formed minute vortex flow along the inner circumferential surface 41d of the casing 41 by the rotating bladed wheel 42, and thus pressure is increased. In one example, the pressure applied to the aqueous solution increases from the suction port, near which the pressure is -0.05 MPa, toward the discharge port, near which the pressure is 0.12 MPa. In this manner, the pressure is increased with a minute vortex flow being repeatedly formed by the bladed wheel 42, and thus the polymer flocculant is sufficiently mixed and is dissolved in water. At this time, the viscosity of the aqueous solution increases as the polymer flocculant is dissolved. As described above, the bladed wheel 42 rotates in a state of not coming into contact with other portions, and therefore, substantially no action of crushing the polymer flocculant mechanically is exhibited, and substantially no shearing stress is generated. The vortex flow that is repeatedly formed through the minute grooves 45 formed in a radial pattern, and its pressure application action promote the mixing and dissolving of the polymer flocculant.

The aqueous solution that has passed through the first regenerative mixer 4A feed the subsequent second regenerative mixer 4B, the aqueous solution is repeatedly formed minute vortex flow along the inner circumferential surface 41d of the casing 41 by the rotating bladed wheel 42, and thus pressure is increased. In one example, the pressure applied to the aqueous solution increases from the suction port, near which the pressure is 0.12 MPa, toward the discharge port, near which the pressure is 0.3 MPa, which is a target pressure. That is, the regenerative mixers 4A and 4B configured to be located at two positions in series are used to successively increase the pressure to a pressure suitable for the dissolving of the polymer flocculant. Also, in the second regenerative mixer 4B, the vortex flow that is repeatedly formed through the minute grooves 45 formed in a radial pattern, and its pressure application action promote the mixing and dissolving of the polymer flocculant in the same manner as in the first regenerative mixer 4A. Furthermore, the pressure is increased to a pressure suitable for the dissolving of the polymer flocculant, thus the polymer flocculant dissolves sufficiently.

The aqueous solution produced through the first regenerative mixer 4A and the second regenerative mixer 4B is divided into a main flow and a circulation flow of the process by adjusting the degree of opening of the three-way valve 6. That is, a portion of the aqueous solution is fed to the downstream process through the process channel 61 at a flow rate required in the downstream process, and the remaining portion thereof is returned to the suction side of the liquid feed pump 3 through the circulation channel 62. When the flow rate required in the downstream process changes, an operator manually adjusts the degree of opening of the three-way valve 6, for example, to feed the aqueous solution to the downstream process through the process channel 61 at the required flow rate. For example, in the case of sludge disposal, the flow rate required in the downstream process changes due to a change in the appropriate chemical injection rate caused by a change in the properties of the sludge. It will be appreciated that there are other reasons. It should be noted that it is preferable to determine the specifications of the devices such that the aqueous solution can be circulated at a flow rate of 0 to 100% of the flow rate required in the downstream process (e.g., maximum flow rate).

The mixing and dissolving system 1 of the above-described embodiment has a configuration in which the aqueous solution containing an undissolved polymer flocculant that remains undissolved in the mixing tank 2 is passed through the first regenerative mixer 4A and the second regenerative mixer 4B that are arranged in series. Then, the regenerative mixers 4A and 4B apply pressure thereto while forming a minute vortex flow. As a result, the mixing and dissolving of the polymer flocculant can be promoted, and the swollen undissolved polymer flocculant can be dissolved. It should be noted that the number of the regenerative mixers provided is not necessarily two or more.

In particular, providing the flow rate adjusting unit that can variably adjust a balance between the flow rate of the aqueous solution flowing through the process channel 61 and the flow rate of the aqueous solution flowing through the circulation channel 62 as in this embodiment makes it possible to variably feed the aqueous solution at a flow rate required in the downstream process without changing the operation states (particularly rotation rates) of the liquid feed pump 3, the first regenerative mixer 4A, and the second regenerative mixer 4B. Furthermore, the remaining portion of the aqueous solution is returned through the circulation channel and then the aqueous solution is repeatedly circulated in a "mixing and dissolving portion", namely from the liquid feed pump 3 to the pressure adjusting unit via the regenerative mixers, thus making it possible to equalize the properties of the aqueous solution in the mixing and dissolving portion (i.e., make the concentration, the viscosity, and the like thereof uniform in the system). In the case where a configuration in which the three-way valve 6 and the circulation channel 62 are not provided and the flow rate is adjusted using the liquid feed pump 3 is employed as in previous cases, when the amount used in the downstream sludge disposal process decreases, for example, the flow rate of the solution fed by the liquid feed pump 3 decreases correspondingly. Depending on the flow rate, the degree of opening of the pressure adjusting valve 5 needs to be reduced to a very small degree in order to keep the pressure in the system of the mixing and dissolving portion at a predetermined pressure. In this case, a phenomenon may occur in which air bubbles, unexpected undissolved matter, and the like that have entered the mixing tank 2 together with the polymer flocculant and water fed into the mixing tank 2 stay on the primary side of the pressure adjusting valve 5, which leads to unstable pressure adjustment. On the contrary, when a configuration is employed in which the liquid feed pump 3 is operated at a full and constant speed, for example, and the flow rate is adjusted using the three-way valve 6, the phenomenon in which air bubbles, unexpected undissolved matter, and the like stay on the primary side of the pressure adjusting valve 5 can be suppressed, which leads to stable pressure adjustment. It should be noted that, if air bubbles and the like were to stay on the primary side of the pressure adjusting valve 5, operating the three-way valve 6 to allow all of the solution to flow through the process channel 61 would make it possible to discharge air bubbles, unexpected undissolved matter, and the like to the outside of the system.

Furthermore, operating the liquid feed pump 3, the first regenerative mixer 4A, and the second regenerative mixer 4B under operation conditions in which constant and high loads are applied makes it possible to increase the dissolving ability. In addition, the cost can be reduced by omitting a device (e.g., inverter) that automatically controls the operation conditions, and the load on an operator is also reduced because there is little need to perform manual control.

The mixing and dissolving were actually performed, and the mesh permeability of the produced polymer flocculant solution was measured. When the flow rate of the solution fed to the downstream process was set to 12.5 (L/min), the mesh permeability was 96.1%, and when the flow rate was set to 16.7 (L/min), the mesh permeability was 95.5%. For comparison, the circulation channel 62 was blocked, and thus the circulation was stopped. When the flow rate of the solution sent to the downstream process was set to 12.5 (L/min), the mesh permeability was 94.0%, and when the flow rate was set to 16.7 (L/min), the mesh permeability was 92.4%. That is, it was confirmed that the dissolving ability improved.

It should be noted that, although the three-way valve 6 is used as a preferred example of the flow rate adjusting unit, there is no limitation thereto as long as a balance between the flow rate in the process channel 61 and the flow rate in the circulation channel 62 can be adjusted. For example, a configuration may also be employed in which valves are respectively provided in the process channel 61 and the circulation channel 62, and the degrees of opening of the valves are adjusted. Alternatively, only one of the process channel 61 and the circulation channel 62 may be provided with a valve.

Furthermore, a configuration may also be employed in which the pressure adjusting valve 5 used as the pressure adjusting unit is omitted, and the discharge pressure of the second regenerative mixer 4B is adjusted using, instead of the three-way valve 6, valves that are respectively provided in the process channel 61 and the circulation channel 62. That is, a balance between the flow rate in the process channel 61 and the flow rate in the circulation channel 62 is also adjusted while the degrees of opening of the valves provided in the process channel 61 and the circulation channel 62 are adjusted such that a value detected by the pressure sensor 51 becomes a predetermined pressure. As described above, a configuration may also be employed in which the flow rate adjusting unit doubles as a pressure adjusting unit. Furthermore, in this embodiment, operation conditions in which a constant and high load is applied are set as the operation conditions of the liquid feed pump 3, the first regenerative mixer 4A, and the second regenerative mixer 4B, and therefore, as long as pressure fluctuation is less likely to occur, a configuration may also be employed in which the pressure adjusting unit itself is omitted while a resistant member such as an orifice is provided as needed, for example.

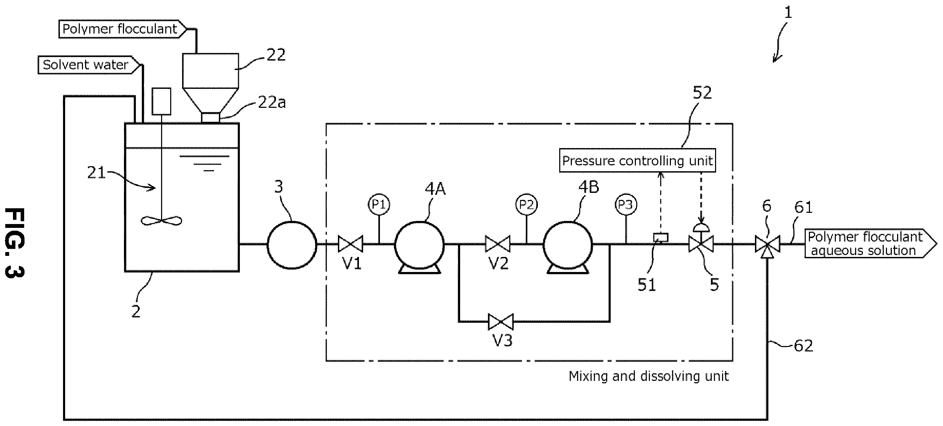

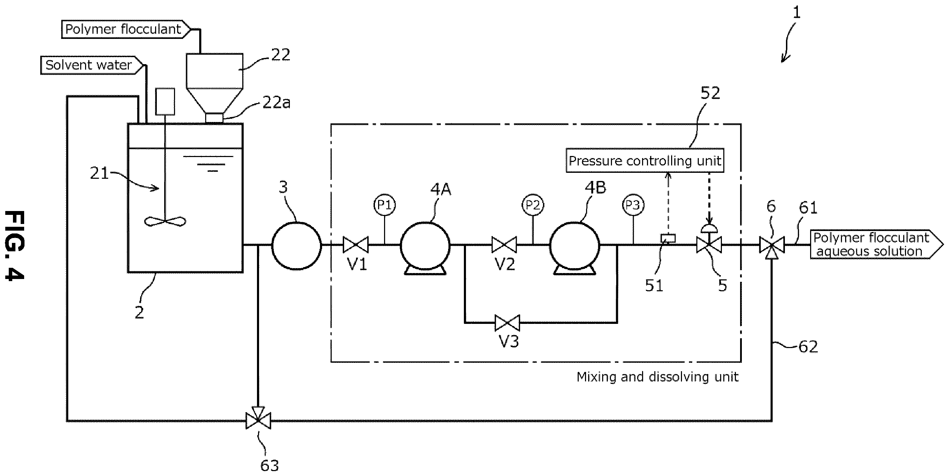

Although the embodiment shown in FIG. 1 has a configuration in which the aqueous solution is returned to the suction side of the liquid feed pump 3 such that the aqueous solution can be reliably returned to the regenerative mixers 4A and 4B, there is no limitation to this configuration, and the aqueous solution may also be returned to the mixing tank 2 in order to promote swelling as shown in FIG. 3, for example. Furthermore, as shown in FIG. 4, a configuration may also be employed in which the circulation channel 62 is branched at an intermediate position and the aqueous solution is returned to both the suction side of the liquid feed pump 3 and the mixing tank 2. In this case, a three-way valve 63 may be provided at the branch point to adjust a balance between the flow rate of the aqueous solution returned to the suction side of the liquid feed pump 3 and the flow rate of the aqueous solution returned to the mixing tank 2. For example, when it is desired to promote dissolving using the regenerative mixers 4A and 4B, the ratio of the aqueous solution returned to the front side of the liquid feed pump 3 is increased, and when it is desired to promote swelling, the ratio of the aqueous solution returned to the mixing tank 2 is increased.

### (SECOND EMBODIMENT)

Subsequently, a polymer flocculant mixing and dissolving system according to a second embodiment will be described. The mixing and dissolving system according to this embodiment is the same as the mixing and dissolving system 1 of the first embodiment, except that a control unit for automatically controlling the flow rate adjusting unit is provided. Accordingly, the same configurations are denoted by the same reference numerals, and detailed descriptions thereof are omitted.

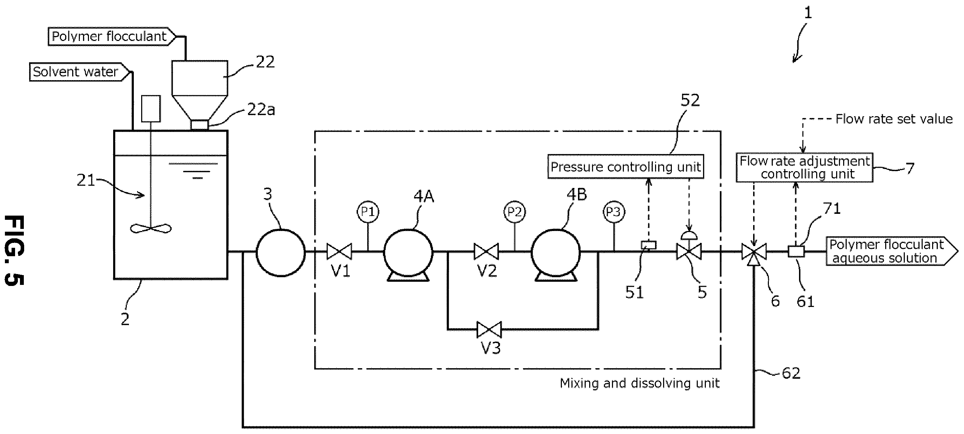

As shown in FIG. 5, the polymer flocculant mixing and dissolving system 1 according to this embodiment includes a flow rate sensor 71 for detecting the flow rate of the aqueous solution flowing through the process channel 61, and a flow rate adjustment controlling unit 7 serving as the controlling unit. The flow rate adjustment controlling unit 7 automatically controls the degree of opening of the three-way valve 6 based on the information regarding the flow rate of the aqueous solution required in the downstream process (flow rate set value) such that a value detected by the flow rate sensor 71 becomes a flow rate set value. A configuration may be employed in which the information regarding the flow rate set value is automatically received from a device used in the downstream process or is input by an operator. Even when such a configuration is employed, the same effects as those of the above-described embodiment can be obtained. In particular, with this embodiment, the flow rate adjustment controlling unit 7 is provided, which makes it possible to rapidly respond to a change in the flow rate required in the downstream process.

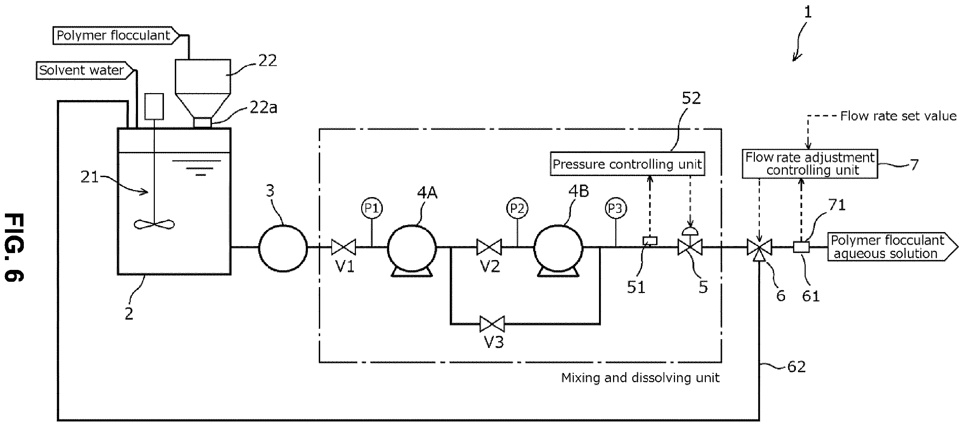

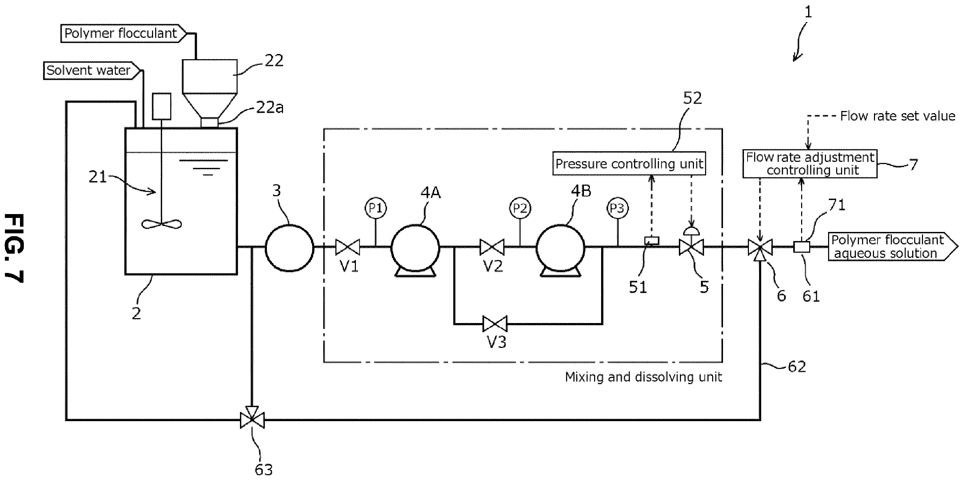

Also in this embodiment, the circulation channel 62 may also be configured to return to the mixing tank 2 as shown in FIG. 6. Alternatively, the circulation channel 62 may also be configured to be branched at an intermediate portion and to return to both the suction side of the liquid feed pump 3 and the mixing tank 2 as shown in FIG. 7.

While the present invention has been described in detail in conjunction with specific embodiments, it is apparent to persons of ordinary knowledge in this technological field that various substitutions, modifications, changes, and the like to the forms and details can be made without departing from the spirit and scope of the invention that are defined in the description of claims. Therefore, the scope of the invention is not limited to the above-described embodiments and the accompanying drawings but should be defined by the claims and their equivalents.

### DESCRIPTION OF REFERENCE NUMERALS

- 1: polymer flocculant mixing and dissolving system
- 2: mixing tank
- 3: liquid feed pump
- 4A: first regenerative mixer
- 4B: second regenerative mixer
- 45: grooves
- 5: pressure adjusting valve
- 51: pressure sensor
- 52: pressure controlling unit
- 6: three-way valve
- 61: process channel
- 62: circulation channel
- 7: flow rate adjustment controlling unit
- 71: flow rate sensor

## Claims

1. A polymer flocculant mixing and dissolving system comprising:
a mixing tank in which a polymer flocculant in a solid state is mixed with water used as a solvent;
a liquid feed unit for feeding an aqueous solution containing the polymer flocculant from the mixing tank;
a regenerative mixer used to mix and dissolve the polymer flocculant by applying pressure to the aqueous solution containing the polymer flocculant fed from the liquid feed unit while forming a vortex flow;
a process channel through which the aqueous solution that has passed through the regenerative mixer is fed to a downstream process; a circulation channel through which the aqueous solution is returned to a position on an upstream side of the liquid feed unit; and a flow rate adjusting unit for adjusting a balance between a flow rate of the aqueous solution flowing through the process channel and a flow rate of the aqueous solution flowing through the circulation channel.

2. The polymer flocculant mixing and dissolving system according to claim 1, wherein the aqueous solution is returned to a suction side of the liquid feed unit and/or the mixing tank through the circulation channel.

3. The polymer flocculant mixing and dissolving system according to claim 1 or 2, further comprising a flow rate adjustment controlling unit for automatically controlling the flow rate adjusting unit based on information regarding the flow rate of the aqueous solution required in the downstream process.

4. The polymer flocculant mixing and dissolving system according to any one of claims 1 to 3, further comprising a pressure adjusting unit for controlling pressure on a discharge side of the regenerative mixer in a channel between the regenerative mixer and the flow rate adjusting unit.

5. The polymer flocculant mixing and dissolving apparatus according to any one of claims 1 to 4, wherein the liquid feed unit and the regenerative mixer are set to the operation conditions in which a constant and high load.
